# EUROPEAN PATENT SPECIFICATION

(11) **EP 4 395 028 B1**
(45) Date of publication and mention of the grant of the patent: **11.11.2026**
(21) Application number: 22900331.4
(22) Date of filing: 23.11.2022
(51) Int. Cl.: H01M 50/213, H01M 50/317, H01M 50/503, H01M 10/613, H01M 50/249, H01M 10/625, H01M 10/6554, H01M 10/6556

(54) **BATTERY HOUSING, BATTERY PACK, AND VEHICLE**
BATTERIEGEHÄUSE, BATTERIEPACK UND FAHRZEUG
BOÎTIER DE BATTERIE, BLOC-BATTERIE ET VÉHICULE

(30) Priority: 30.11.2021 CN 202122973127 U
(43) Date of publication of application: 03.07.2024
(73) Proprietor: BYD Company Limited, Shenzhen, Guangdong 518118 (CN)
(72) Inventor: SHU, Yuanmao, Shenzhen, Guangdong 518118 (CN); WU, Yanfeng, Shenzhen, Guangdong 518118 (CN); WANG, Xiao, Shenzhen, Guangdong 518118 (CN); ZHENG, Weixin, Shenzhen, Guangdong 518118 (CN); LU, Zhipei, Shenzhen, Guangdong 518118 (CN)
(74) Representative: Dehns Germany Partnerschaft mbB
(86) International application number: PCT/CN2022/133643
(87) International publication number: WO 2023/098526

(56) References cited:
- CN-A- 111 446 397
- CN-A- 111 446 397
- CN-A- 113 394 483
- CN-A- 113 540 615
- CN-U- 214 153 119

## Description

### FIELD

The present invention relates to the field of battery technologies, and more specifically, to a battery housing, a battery pack, and a vehicle.

### BACKGROUND

Currently, to improve strength of a battery pack, an intermediate beam often needs to be provided in the battery pack. However, the intermediate beam occupies a part of space of the battery pack, resulting in a low overall utilization of the battery pack. In a current new solution, the intermediate beam in the battery pack is utilized and a battery module is arranged in the intermediate beam. However, when the battery module is arranged in the intermediate beam, the following problem exists: when a thermal failure occurs in a battery, generated high-temperature and high-pressure gas cannot be cooled and discharged out of the battery pack in time, and consequently, the high-temperature gas accumulates in short duration and cannot be discharged. As a result, adjacent battery cores or even all battery cores in the entire battery pack easily catch fire due to thermal runaway. Therefore, it is an urgent problem to be resolved to cool and discharge the gas generated by a battery core module in the intermediate beam and improve safety performance of the battery pack. Document CN 111 446 397 A discloses a battery pack case and a battery pack, including a battery box, the battery box being provided with a plurality of independent cavities for installing batteries. The side of the battery box is provided with a liquid-cooled inlet and a liquid-cooled outlet. The liquid-cooled inlet and the liquid-cooled outlet are connected through a liquid-cooled flow channel arranged in the battery box, and are connected to the battery box. The interior of the battery box is provided with an exhaust passage, which is connected to the cavity, and an explosion-proof valve is provided at the discharge end of the exhaust passage. The explosion-proof valve is provided with a plug. The battery box includes a side beam, a cross beam, and a bottom plate. The side beam forms a four-sided frame structure, and the cross beam is arranged inside the four-sided frame structure and separated into a plurality of independent cavities. First vent holes are provided on both sides of the cross beam, the vent holes are connected with the vent passage, the inner side of the side beam is provided with a second vent hole, the second vent hole is connected with the exhaust passage, and the liquid cooling inlet and liquid cooling outlet at both ends of the side beam are both provided with an explosion-proof valve installation plug.

### SUMMARY

To resolve the foregoing technical problem, an objective of the present invention is to provide a battery housing, a battery pack, and a vehicle. The battery housing provided in the present invention can cool high-temperature gas generated by a battery core module and quickly and directionally diffuse the gas to a tray, and then discharge the gas out of the battery pack, to protect the battery pack and improve safety of the battery pack.

According to a first aspect of the present invention, a battery housing according to claim 1 is provided. The battery housing includes:
a tray, where a first channel is formed in the tray, an explosion-proof valve is arranged on the tray, and the first channel is in communication with the explosion-proof valve;
at least one module transverse beam, where the module transverse beam is arranged in the tray, the module transverse beam includes an accommodating portion, at least a part of a bottom of the accommodating portion is depressed downward to form a groove that can accommodate gas, and an opening is arranged at least one end that is of the groove and that is along a length direction of the module transverse beam; and
a liquid cooling plate, where the liquid cooling plate is hermetically connected to an outside of a bottom of the module transverse beam, at least one connection channel is formed between the liquid cooling plate and the module transverse beam, and the opening is in communication with the first channel through the connection channel.

Optionally, the module transverse beam includes a first connection portion and a second connection portion. The first connection portion, the accommodating portion, and the second connection portion are secured and connected in sequence. The first connection portion and the second connection portion are respectively connected to the tray.

A first opening and a second opening are respectively arranged at two ends that are of the groove and that are along the length direction of the module transverse beam.

A second channel is formed between the first connection portion and the liquid cooling plate along the length direction of the module transverse beam, and a third channel is formed between the second connection portion and the liquid cooling plate along the length direction of the module transverse beam.

One end of the second channel is in communication with the first opening, and one end of the third channel is in communication with the second opening.

Optionally, a first communicating port and a second communicating port are respectively provided at the first connection portion and the second connection portion. The other end of the second channel is in communication with one end of the first communicating port, and the other end of the third channel is in communication with one end of the second communicating port. The other end of the first communicating port and the other end of the second communicating port are respectively in communication with the first channel.

Optionally, the second channel includes a first connection channel and a second connection channel arranged on two sides along the length direction of the module transverse beam, and the third channel includes a third connection channel and a fourth connection channel arranged on the two sides along the length direction of the module transverse beam.

One end of the first connection channel and one end of the second connection channel are respectively in communication with the first opening, and one end of the third connection channel and one end of the fourth connection channel are respectively in communication with the second opening. The first communicating port and the second communicating port are respectively provided at the first connection portion and the second connection portion. The other end of the first connection channel and the other end of the second connection channel are in communication with one end of the first communicating port. The other end of the third connection channel and the other end of the fourth connection channel are in communication with one end of the second communicating port. The other end of the first communicating port and the other end of the second communicating port are respectively in communication with the first channel.

Optionally, the first connection channel is in communication with the third connection channel to form an integrated channel, and the second connection channel is in communication with the fourth connection channel to form an integrated channel.

Optionally, a depth of the groove is 3 mm to 5 mm, a difference between a length of an accommodating base and a length of the groove is 15 mm to 35 mm, and a difference between the width of the accommodating base and a width of the groove is 15 mm to 35 mm.

Optionally, the bottom of the module transverse beam is connected to the liquid cooling plate by using a thermally conductive structural adhesive.

Optionally, the module transverse beam is a metal component.

Optionally, the module transverse beam is made of aluminum alloy.

According to a second aspect of the present invention, a battery pack is provided. The battery pack includes a battery core module and the battery housing described in the first aspect, where the battery core module is arranged in an accommodating portion.

Optionally, the battery core module includes a number of battery cores, a pre-positioning bracket, and a housing. There is an opening at a bottom of the housing, and the pre-positioning bracket stops at and blocks the opening at the bottom of the housing to form an accommodating space for accommodating the battery cores. A number of battery core positioning portions are arranged on one side that is of the pre-positioning bracket and that is located in the accommodating space, and the number of battery cores are respectively arranged in the number of battery core positioning portions.

Optionally, the battery core module further includes a positive connection sheet and a negative connection sheet. The positive connection sheet and the negative connection sheet are respectively located on two sides of the pre-positioning bracket, and the positive connection sheet and the negative connection sheet are insulated from each other. A through groove is arranged at a bottom wall of the battery core positioning portion, and a positive electrode or a negative electrode of the battery core is connected to the positive connection sheet or the negative connection sheet through the through groove.

Optionally, a pouring sealant is arranged between the battery core, the housing, the pre-positioning bracket, the positive connection sheet, and the negative connection sheet. The battery core, the housing, the pre-positioning bracket, the positive connection sheet, and the negative connection sheet are hermetically and secured and connected by using the pouring sealant.

Optionally, an outlined-rectangle sealant-resistant foam is arranged between the battery core module and a module transverse beam. A step portion is arranged around the groove in the accommodating portion. A shape of the outlined-rectangle sealant-resistant foam is consistent with a shape of the step portion, and the outlined-rectangle sealant-resistant foam is contacted with the step portion.

Optionally, an outlined-rectangle opening of the outlined-rectangle sealant-resistant foam corresponds to an opening of the groove.

Optionally, the battery core module is at least one of a ternary lithium battery core module and a polymer lithium battery core module.

Optionally, the battery core is a cylindrical battery or a soft-pack battery.

Optionally, a pressure relief valve is provided at the battery core module, and the pressure relief valve is arranged toward the groove.

According to a third aspect of the present invention, a vehicle is provided. The vehicle includes the battery pack described in the second aspect.

Optionally, the vehicle is a pure electric vehicle or a hybrid vehicle.

A technical effect of the present invention is that embodiments of the present invention provide a battery housing. The groove for accommodating high-temperature and high-pressure gas generated due to thermal runaway of the battery core is arranged at the bottom of the accommodating portion of the module transverse beam. The bottom of the module transverse beam is connected with the liquid cooling plate that can quickly cool the high-temperature and high-pressure gas. The opening for discharging the high-temperature and high-pressure gas is arranged at an end part of the groove. The discharged high-temperature and high-pressure gas is directionally discharged into the first channel in the tray through the connection channel and is discharged out of the battery pack through the explosion-proof valve. Because the gas is discharged directionally, another battery core in the battery pack is not affected by the gas. The battery housing in the present invention can cool, in time, the high-temperature and high-pressure gas generated by due to a thermal failure of the battery core, and can quickly and directionally discharge the gas out of the battery pack, to protect the battery pack and improve safety of the battery pack.

Other features and advantages of the present invention are more clear based on the following detailed descriptions of example embodiments of the present invention with reference to the accompanying drawings.

### BRIEF DESCRIPTION OF THE DRAWINGS

Accompanying drawings constitute a part of the specification, describe embodiments in the present invention, and are used together with the specification to describe the principle of the present invention.
FIG. 1 is a schematic diagram of a structure of a battery pack according to an embodiment of the present invention;
FIG. 2 is a schematic partial diagram of a structure of a battery pack according to an embodiment of the present invention;
FIG. 3 is an exploded view of a structure of a battery pack according to an embodiment of the present invention;
FIG. 4 is a schematic diagram of a structure of a pre-positioning bracket according to an embodiment of the present invention;
FIG. 5 is a schematic diagram of a structure in which a module transverse beam and a battery core module are secured according to an embodiment of the present invention;
FIG. 6 is a cross-sectional view of a plane A-A shown in FIG. 5;
FIG. 7 is a schematic diagram of a gas flow direction in a groove according to an embodiment of the present invention; and
FIG. 8 is a schematic partial diagram in which gas in a groove flows to a first connection portion according to an embodiment of the present invention.

### DETAILED DESCRIPTION

Various example embodiments of the present invention now are described in detail with reference to the accompanying drawings. It should be noted that, unless otherwise specified, relative arrangement, numerical expressions, and numerical values of components and steps described in the embodiments do not limit the scope of the present invention.

The following descriptions of at least one example embodiment are merely illustrative, and in no way constitute any limitation on the present invention and application or use thereof.

Technologies and devices known to those of ordinary skill in related arts may not be discussed in detail, but in an appropriate case, the technologies and the devices should be considered as a part of the specification.

In all examples shown and discussed herein, any specific value should be construed merely as examples but not as limitations. Therefore, another example of example embodiments may have different values.

It should be noted that, similar reference signs or letters in the following accompanying drawings indicate similar items. Therefore, once an item is defined in one accompanying drawing, the item does not need to be further discussed in the subsequent accompanying drawings.

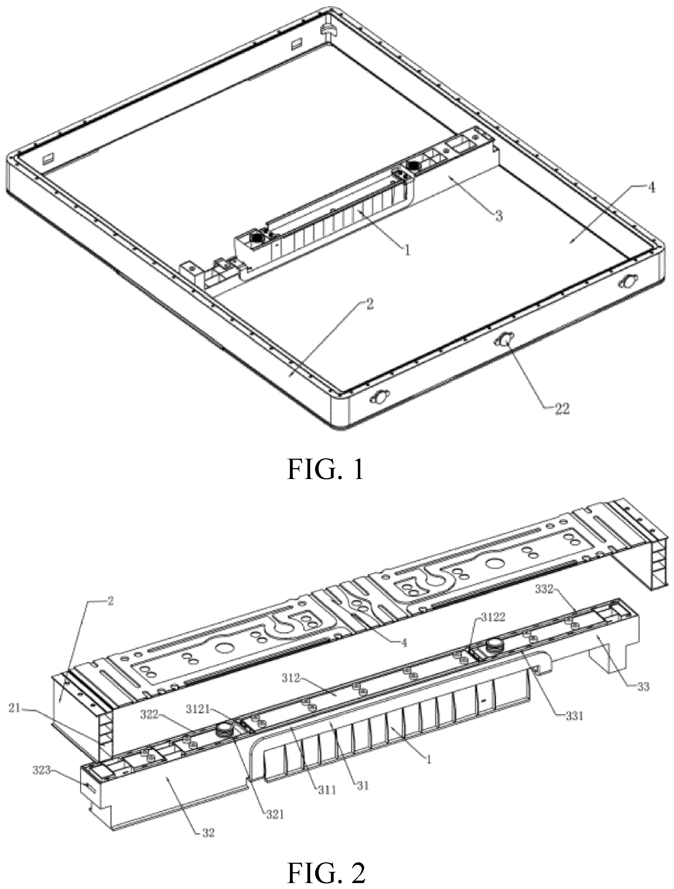

According to a first aspect of the present invention, a battery housing is provided. Refer to FIG. 1. The battery housing includes a tray 2, at least one module transverse beam 3, and a liquid cooling plate 4. The module transverse beam 3 is arranged in the tray 2.

As shown in FIG. 2, the module transverse beam 3 includes an accommodating portion 31. At least a part of a bottom of the accommodating portion 31 is depressed downward to form a groove 312 that can accommodate gas. An opening is arranged at at least one end that is of the groove 312 and that is along a length direction of the module transverse beam 3.

The liquid cooling plate 4 is hermetically connected to an outside of a bottom of the module transverse beam 3. At least one connection channel is formed between the liquid cooling plate 4 and the module transverse beam 3. The opening is in communication with a first channel 21 through the connection channel.

In the battery housing provided in this embodiment of the present invention, when a battery core generates high-temperature and high-pressure gas due to thermal runaway, the high-temperature and high-pressure gas breaks through a battery core module and enters the groove, and is cooled by the liquid cooling plate. Initially cooled gas quickly diffuses to the opening of the groove, and directionally diffuses to the tray through the connection channel. The gas breaks through an explosion-proof valve 22 and is discharged out of a battery pack. The battery housing in the present invention can cool, in time, the high-temperature and high-pressure gas generated by the battery core, and quickly and directionally discharge the gas out of the battery pack through the connection channel and the first channel 21, to avoid a case that an adjacent battery core catches fire because thermal runaway also occurs due to a high-temperature caused by thermal diffusion of the battery core. It is ensured that thermal runaway of a single battery core does not expand and spread to the entire battery pack, and controllability of safety of the entire battery pack and safety of an electric vehicle passenger are ensured. In conclusion, the battery housing in the present invention can cool, in time, the high-temperature and high-pressure gas generated by the battery core due to a thermal failure, and quickly and directionally discharge the gas out of the battery pack, to protect the battery pack and improve safety of the battery pack.

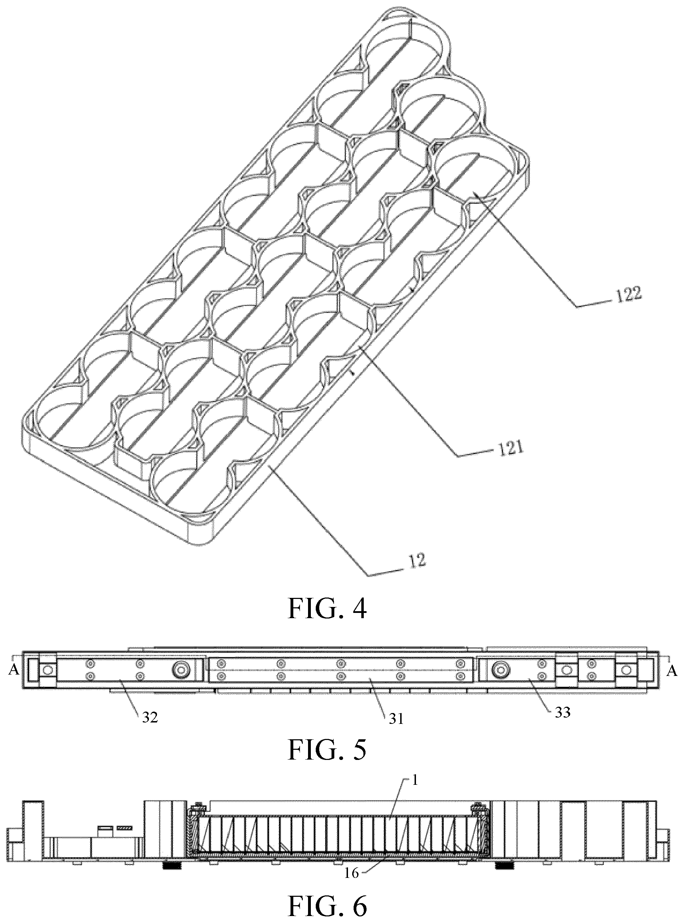

In an embodiment of the present invention, as shown in FIG. 2 and FIG. 4, the module transverse beam 3 includes a first connection portion 32 and a second connection portion 33. The first connection portion 32, the accommodating portion 31, and the second connection portion 33 are secured and connected in sequence. The first connection portion 32 and the second connection portion 33 are respectively connected to a tray 2.

A first opening 3121 and a second opening 3122 are respectively arranged at two ends that are of the groove 312 and that are along the length direction of the module transverse beam 3.

A second channel is formed between the first connection portion 32 and the liquid cooling plate 4 along the length direction of the module transverse beam 3. A third channel is formed between the second connection portion 33 and the liquid cooling plate 4 along the length direction of the module transverse beam 3.

One end of the second channel is in communication with the first opening 3121, and one end of the third channel is in communication with the second opening 3122. A first communicating port 323 and a second communicating port 333 are respectively provided at the first connection portion 32 and the second connection portion 33. The other end of the second channel is in communication with one end of the first communicating port 323, and the other end of the third channel is in communication with one end of the second communicating port 333. The other end of the first communicating port 323 and the other end of the second communicating port 333 are respectively in communication with the first channel 21.

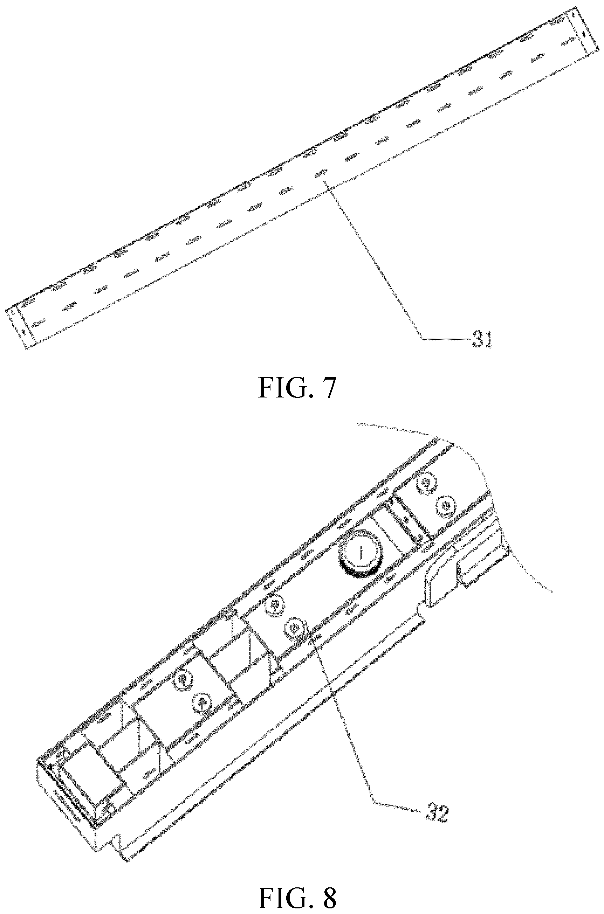

In an embodiment of the present invention, the second channel includes a first connection channel 321 and a second connection channel 322 arranged on two sides along the length direction of the module transverse beam 3. The third channel includes a third connection channel 331 and a fourth connection channel 332 arranged on the two sides along the length direction of the module transverse beam 3. One end of the first connection channel 321 and one end of the second connection channel 322 are respectively in communication with the first opening 3121. One end of the third connection channel 331 and one end of the fourth connection channel 332 are respectively in communication with the second opening 3122. The first communicating port 323 and the second communicating port 333 are respectively provided at the first connection portion 32 and the second connection portion 33. The other end of the first connection channel 321 and the other end of the second connection channel 322 are in communication with one end of the first communicating port 323. The other end of the third connection channel 331 and the other end of the fourth connection channel 332 are in communication with one end of the second communicating port 333. The other end of the first communicating port 323 and the other end of the second communicating port 333 are respectively in communication with the first channel 21. In this embodiment of the present invention, the battery core module is located in the middle of the module transverse beam, and connection channels are arranged at two ends of the battery core module. When a battery core generates high-temperature and high-pressure gas due to thermal runaway, after a liquid cooling plate initially cools the high-temperature and high-pressure gas, the gas may quickly diffuse to the openings at the two ends of the groove, directionally diffuse to a channel on the tray through the connection channel of the connection portion, breaks through the explosion-proof valve 22, and is discharged out of the battery pack. In this embodiment of the present invention, after the high-temperature and high-pressure gas generated by the battery core module due to a failure enters the groove, where as shown in FIG. 7, a direction of an arrow in the figure represents a gas flow direction, the gas diffuses from the middle to the two ends of the groove, and is in communication with the connection channel of the connection portion through the first opening and the second opening. As shown in FIG. 8, a direction of an arrow in the figure represents a gas flow direction. The gas diffuses from the groove through the first opening. After diffusing from the first opening, the gas diffuses from a middle of the first opening to the first connection channel and the second connection channel that are on two sides. In this way, the gas is diffused in a short distance and has a specific diffusion direction, so that the gas can be discharged out of the battery pack faster and safety of the battery pack is better ensured.

In an embodiment of the present invention, the first connection channel 321 is in communication with the third connection channel 331 to form an integrated channel, and the second connection channel 322 is in communication with the fourth connection channel 332 to form an integrated channel. In this embodiment of the present invention, there is a channel on each of the two sides along the direction of the module transverse beam, and the channels are respectively in communication with the first connection portion, the accommodating portion, and the second connection portion. In other words, the channel on each side is integrated. In this way, a formed structure of the module transverse beam is simple. After diffusing from the first opening or the second opening, the gas generated due to thermal runaway may diffuse to left or right through the channel.

In an embodiment of the present invention, a depth of the groove is 3 mm to 5 mm, such as 3 mm, 3.5 mm, 4 mm, 4.5 mm, or 5 mm. A difference between a length of an accommodating base and a length of the groove is 15 mm to 35 mm, such as 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, or 35 mm. In an embodiment of the present invention, the length of the accommodating base may be 580 mm, and the length of the groove may be 550 mm. A difference between a width of the accommodating base and a width of the groove is 15 mm to 35 mm, such as 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, or 35 mm. In an embodiment of the present invention, the width of the accommodating base may be 80 mm, and the width of the groove may be 50 mm. When the depth, width, and length of the groove are within the foregoing ranges, rapid gas diffusion can be ensured while space of the battery pack is minimized.

In an embodiment of the present invention, the bottom of the module transverse beam 3 is connected to the liquid cooling plate 4 by using a thermally conductive structural adhesive 34. On one hand, the thermally conductive structural adhesive 34 can be used to secure and connect the liquid cooling plate 4 to the module transverse beam. On the other hand, the thermally conductive structural adhesive can be used to transfer a temperature of gas generated due to thermal runaway to the liquid cooling plate for cooling as quickly as possible. In other words, a function of the thermally conductive structural adhesive 34 is to ensure a connection between the module transverse beam and the liquid cooling plate while transferring the temperature to the liquid cooling plate for cooling as quickly as possible.

In an embodiment of the present invention, the module transverse beam is a metal component. For example, the module transverse beam 3 is made of aluminum alloy, and an entire weight of the battery pack is reduced.

According to a second aspect of the present invention, a battery pack is provided. Refer to FIG. 1. The battery pack includes: a battery core module 1 and the battery housing provided in the first aspect.

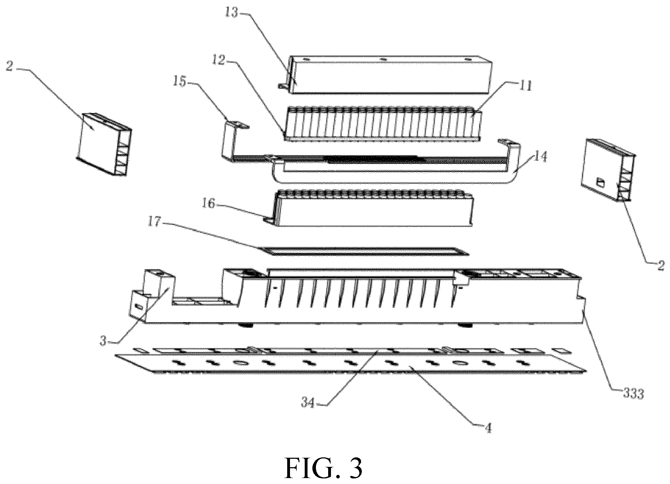

In an embodiment of the present invention, as shown in FIG. 3 and FIG. 4, the battery core module 1 includes a number of battery cores 11, a pre-positioning bracket 12, and a housing 13. There is an opening at a bottom of the housing 13, and the pre-positioning bracket 12 stops at and blocks the opening at the bottom of the housing 13 to form an accommodating space for accommodating the battery cores. The battery cores 11 are in the accommodating space. A number of battery core positioning portions 121 are arranged on one side that is of the pre-positioning bracket 12 and that is located in the accommodating space, and the number of battery cores 11 are respectively arranged in the number of battery core positioning portions 121.

In an embodiment of the present invention, as shown in FIG. 3 and FIG. 4, the battery core module 1 further includes a positive connection sheet 14 and a negative connection sheet 15. The positive connection sheet 14 and the negative connection sheet 15 are respectively located on two sides of the pre-positioning bracket 12, and the positive connection sheet 14 and the negative connection sheet 15 are insulated from each other. A through groove 122 is arranged at a bottom wall of the battery core positioning portion 121, and a positive electrode or a negative electrode of the battery core 11 is connected to the positive connection sheet 14 or the negative connection sheet 15 through the through groove 122.

In an embodiment of the present invention, as shown in FIG. 3 and FIG. 4, a pouring sealant 16 is arranged between the battery core 11, the housing 13, the pre-positioning bracket 12, the positive connection sheet 14, and a negative connection sheet 15. The number of battery cores 11, the housing 13, the pre-positioning bracket 12, the positive connection sheet 14, and the negative connection sheet 15 are hermetically and secured and connected by using the pouring sealant 16.

In the present invention, an assembly process of the battery core module 1 is as follows: First, the battery core 11 is initially secured in the pre-positioning bracket 12 by using the battery core positioning portion 121, where a positive electrode or a negative electrode of a battery is connected to the positive connection sheet or the negative connection sheet respectively through the through groove. Then, the pouring sealant is injected into the housing. As shown in FIG. 5 and FIG. 6, the pouring sealant is filled into gaps between the housing, the battery core, the pre-positioning bracket 12, the positive connection sheet 14, and the negative connection sheet 15 and is used to fix the housing, the battery core, the pre-positioning bracket 12, the positive connection sheet 14, and the negative connection sheet 15 together to form the battery core module 1 with an integrated structure.

In an embodiment of the present invention, as shown in FIG. 3, an outlined-rectangle sealant-resistant foam 17 is arranged between the battery core module 1 and the module transverse beam 3. A step portion 311 is arranged around the groove 312 in the accommodating portion. A shape of the outlined-rectangle sealant-resistant foam 17 is consistent with a shape of the step portion 311, and the outlined-rectangle sealant-resistant foam 17 is contacted with the step portion 311. In other words, a shape and size of an outlined-rectangle opening of the outlined-rectangle sealant-resistant foam 17 is the same as a shape and size of an opening of the groove 312, so that the groove 312 is exposed from the outlined-rectangle sealant-resistant foam 17.

In an embodiment of the present invention, when the battery core module is arranged in the module transverse beam, the battery core module serves as an entirety and is hermetically contacted with the step portion with the outlined-rectangle sealant-resistant foam. An outlined-rectangle opening of the outlined-rectangle sealant-resistant foam corresponds to an opening of the groove. When a pouring sealant is filled into the battery pack later, due to an effect of the outlined-rectangle sealant-resistant foam, the pouring sealant does not enter the groove, to facilitate high-temperature and high-pressure gas to quickly diffuse into the groove when thermal runaway occurs later.

In an embodiment of the present invention, the battery core module is at least one of a ternary lithium battery core module and a polymer lithium battery core module. The battery core module is formed by connecting a number of battery cores, and the battery core is a cylindrical battery or a soft-pack battery.

In an embodiment of the present invention, a pressure relief valve is arranged on the battery core module, and the pressure relief valve is arranged toward the groove. When the battery core module generates high-temperature gas due to thermal runaway, the high-temperature gas flows into the groove through the pressure relief valve.

According to a third aspect of the present invention, a vehicle is provided. The vehicle includes the battery pack in the first aspect. For example, the vehicle may be a pure electric vehicle or a hybrid vehicle such as a car, a bus, or a truck. The present invention improves use safety of the vehicle.

The foregoing embodiments describe emphatically differences between embodiments. Provided that different optimization features between embodiments are not inconsistent, embodiments can be combined to form a better embodiment. In consideration of simplicity of writing, details are not described herein.

Although some specific embodiments of the present invention have been described in detail by using examples, a person skilled in the art should understand that the foregoing examples are merely for description and are not intended to limit the scope of the present invention. A person skilled in the art should understand that modifications may be made to the foregoing embodiments without departing from the scope of the present invention as defined in the appended claims.

### Description of reference numerals:

1. battery core module; 11. battery core; 12. pre-positioning bracket; 121. battery core positioning portion; 122. through groove; 13. housing; 14. positive connection sheet; 15. negative connection sheet; 16. pouring sealant; 17. outlined-rectangle sealant-resistant foam;
2. tray; 21. first channel; 22. explosion-proof valve;
3. module transverse beam; 31. accommodating portion; 311. step portion; 312. groove; 3121. first opening; 3122. second opening; 32. first connection portion; 321. first connection channel; 322. second connection channel; 323. first communicating port; 33. second connection portion; 331. third connection channel; 332. fourth connection channel; 333. second communicating port; 34. thermally conductive structural adhesive; and
4. liquid cooling plate.

## Claims

1. A battery housing, comprising:
a tray (2), a first channel (21) being formed in the tray (2), an explosion-proof valve (22) being arranged on the tray (2), and the first channel (21) being in communication with the explosion-proof valve (22);
at least one module transverse beam (3), the module transverse beam (3) being arranged in the tray (2), the module transverse beam (3) comprising an accommodating portion (31), at least a part of a bottom of the accommodating portion (31) being depressed downward to form a groove (312) that can accommodate gas, and an opening being arranged at at least one end that is of the groove (312) and that is along a length direction of the module transverse beam (3); and
a liquid cooling plate (4), the liquid cooling plate (4) being hermetically connected to an outside of a bottom of the module transverse beam (3), at least one connection channel being formed between the liquid cooling plate (4) and the module transverse beam (3), and the opening being in communication with the first channel (21) through the connection channel.

2. The battery housing according to claim 1, wherein the module transverse beam (3) comprises a first connection portion (32) and a second connection portion (33), the first connection portion (32), the accommodating portion (31), and the second connection portion (33) are secured and connected in sequence, and the first connection portion (32) and the second connection portion (33) are respectively connected to the tray (2);
a first opening (3121) and a second opening (3122) are respectively arranged at two ends that are of the groove (312) and that are along the length direction of the module transverse beam (3);
a second channel is formed between the first connection portion (32) and the liquid cooling plate (4) along the length direction of the module transverse beam (3), and a third channel is formed between the second connection portion (33) and the liquid cooling plate (4) along the length direction of the module transverse beam (3); and
one end of the second channel is in communication with the first opening (3121), and one end of the third channel is in communication with the second opening (3122).

3. The battery housing according to claim 2, wherein a first communicating port (323) and a second communicating port (333) are respectively provided at the first connection portion (32) and the second connection portion (33), the other end of the second channel is in communication with one end of the first communicating port (323), the other end of the third channel is in communication with one end of the second communicating port (333), and the other end of the first communicating port (323) and the other end of the second communicating port (333) are respectively in communication with the first channel (21).

4. The battery housing according to any one of claims 1 to 3, wherein the second channel comprises a first connection channel (321) and a second connection channel (322) arranged on two sides along the length direction of the module transverse beam (3), and the third channel comprises a third connection channel (331) and a fourth connection channel (332) arranged on the two sides along the length direction of the module transverse beam (3);
one end of the first connection channel (321) and one end of the second connection channel (322) are respectively in communication with the first opening (3121), one end of the third connection channel (331) and one end of the fourth connection channel (332) are respectively in communication with the second opening (3122); and the first communicating port (323) and the second communicating port (333) are respectively provided at the first connection portion (32) and the second connection portion (33), the other end of the first connection channel (321) and the other end of the second connection channel (322) are in communication with one end of the first communicating port (323), the other end of the third connection channel (331) and the other end of the fourth connection channel (332) are in communication with one end of the second communicating port (333), and the other end of the first communicating port (323) and the other end of the second communicating port (333) are respectively in communication with the first channel (21).

5. The battery housing according to claim 4, wherein the first connection channel (321) is in communication with the third connection channel (331) to form an integrated channel, and the second connection channel (322) is in communication with the fourth connection channel (332) to form an integrated channel.

6. The battery housing according to any one of claims 1 to 5, wherein a depth of the groove (312) is 3 mm to 5 mm, a difference between a length of an accommodating base and a length of the groove (312) is 15 mm to 35 mm, and a difference between a width of the accommodating base and a width of the groove (312) is 15 mm to 35 mm,
and/or wherein the bottom of the module transverse beam (3) is connected to the liquid cooling plate (4) by using a thermally conductive structural adhesive (34).

7. The battery housing according to any one of claims 1 to 6, wherein the module transverse beam (3) is a metal component,
particularly wherein the module transverse beam (3) is made of aluminum alloy.

8. A battery pack, comprising a battery core module (1) and the battery housing according to any one of claims 1 to 7, the battery core module (1) being arranged in an accommodating portion (31).

9. The battery pack according to claim 8, wherein the battery core module (1) comprises a plurality of battery cores (11), a pre-positioning bracket (12), and a housing (13); there is an opening at a bottom of the housing (13), and the pre-positioning bracket (12) stops at and blocks the opening at the bottom of the housing (13) to form an accommodating space for accommodating the battery cores (11); and a plurality of battery core positioning portions (121) are arranged on one side that is of the pre-positioning bracket (12) and that is located in the accommodating space, and the plurality of battery cores (11) are respectively arranged in the plurality of battery core positioning portions (121).

10. The battery pack according to claim 9, wherein the battery core module (1) further comprises a positive connection sheet (14) and a negative connection sheet (15), the positive connection sheet (14) and the negative connection sheet (15) are respectively located on two sides of the pre-positioning bracket (12), and the positive connection sheet (14) and the negative connection sheet (15) are insulated from each other; and a through groove (122) is arranged at a bottom wall of the battery core positioning portion (121), and a positive electrode or a negative electrode of the battery core (11) is connected to the positive connection sheet (14) or the negative connection sheet (15) through the through groove (122).

11. The battery pack according to claim 10, wherein a pouring sealant (16) is arranged between the battery core (11), the housing (13), the pre-positioning bracket (12), the positive connection sheet, and the negative connection sheet (15), and the battery core (11), the housing (13), the pre-positioning bracket (12), the positive connection sheet, and the negative connection sheet (15) are hermetically and secured and connected by using the pouring sealant (16).

12. The battery pack according to claim 11, wherein an outlined-rectangle sealant-resistant foam (17) is arranged between the battery core module (1) and a module transverse beam (3), a step portion (311) is arranged around the groove (312) in the accommodating portion (31), a shape of the outlined-rectangle sealant-resistant foam (17) is consistent with a shape of the step portion (311), and the outlined-rectangle sealant-resistant foam (17) is contacted with the step portion (311),
particularly wherein an outlined-rectangle opening of the outlined-rectangle sealant-resistant foam (17) corresponds to an opening of the groove (312).

13. The battery pack according to any one of claims 8 to 12, wherein the battery core module (1) is at least one of a ternary lithium battery core module and a polymer lithium battery core module,
and/or wherein the battery core (11) is a cylindrical battery or a soft-pack battery,
and/or wherein a pressure relief valve is provided at the battery core module (1), and the pressure relief valve is arranged toward the groove (312).

14. A vehicle, comprising the battery pack according to any one of claims 8 to 13.

15. The vehicle according to claim 14, wherein the vehicle is a pure electric vehicle or a hybrid vehicle.

## Patentansprüche

1. Gehäuse für eine Batterie, umfassend:
eine Wanne (2), wobei in der Wanne (2) ein erster Kanal (21) ausgebildet ist, ein explosionssicheres Ventil (22) an der Wanne (2) angeordnet ist und der erste Kanal (21) mit dem explosionssicheren Ventil (22) in Verbindung steht;
mindestens einen Modulquerträger (3), wobei der Modulquerträger (3) in der Wanne (2) angeordnet ist, der Modulquerträger (3) einen Aufnahmeabschnitt (31) umfasst, wobei mindestens ein Teil eines Bodens des Aufnahmeabschnitts (31) nach unten vertieft ist, um eine Nut (312) zu bilden, die Gas aufnehmen kann, und eine Öffnung an mindestens einem Ende der Nut (312) entlang einer Längsrichtung des Modulquerträgers (3) angeordnet ist; und
eine Flüssigkeitskühlplatte (4), wobei die Flüssigkeitskühlplatte (4) hermetisch mit einer Außenseite eines Bodens des Modulquerträgers (3) verbunden ist, mindestens ein Verbindungskanal zwischen der Flüssigkeitskühlplatte (4) und dem Modulquerträger (3) ausgebildet ist und die Öffnung über den Verbindungskanal mit dem ersten Kanal (21) in Verbindung steht.

2. Gehäuse für eine Batterie nach Anspruch 1, wobei der Modulquerträger (3) einen ersten Verbindungsabschnitt (32) und einen zweiten Verbindungsabschnitt (33) umfasst, der erste Verbindungsabschnitt (32), der Aufnahmeabschnitt (31) und der zweite Verbindungsabschnitt (33) in dieser Reihenfolge fest verbunden sind und der erste Verbindungsabschnitt (32) und der zweite Verbindungsabschnitt (33) jeweils mit der Wanne (2) verbunden sind;
eine erste Öffnung (3121) und eine zweite Öffnung (3122) jeweils an zwei Enden der Nut (312) entlang der Längsrichtung des Modulquerträgers (3) angeordnet sind;
ein zweiter Kanal zwischen dem ersten Verbindungsabschnitt (32) und der Flüssigkeitskühlplatte (4) entlang der Längsrichtung des Modulquerträgers (3) ausgebildet ist und ein dritter Kanal zwischen dem zweiten Verbindungsabschnitt (33) und der Flüssigkeitskühlplatte (4) entlang der Längsrichtung des Modulquerträgers (3) ausgebildet ist; und
ein Ende des zweiten Kanals mit der ersten Öffnung (3121) in Verbindung steht und ein Ende des dritten Kanals mit der zweiten Öffnung (3122) in Verbindung steht.

3. Gehäuse für eine Batterie nach Anspruch 2, wobei am ersten Verbindungsabschnitt (323) und am zweiten Verbindungsabschnitt (333) jeweils eine erste Verbindungsöffnung (32) und eine zweite Verbindungsöffnung (33) vorgesehen sind, das andere Ende des zweiten Kanals mit einem Ende der ersten Verbindungsöffnung (323) in Verbindung steht, das andere Ende des dritten Kanals mit einem Ende der zweiten Verbindungsöffnung (333) in Verbindung steht und das andere Ende der ersten Verbindungsöffnung (323) und das andere Ende der zweiten Verbindungsöffnung (333) jeweils mit dem ersten Kanal (21) in Verbindung stehen.

4. Gehäuse für eine Batterie nach einem der Ansprüche 1 bis 3, wobei der zweite Kanal einen ersten Verbindungskanal (321) und einen zweiten Verbindungskanal (322) umfasst, die auf zwei Seiten entlang der Längsrichtung des Modulquerträgers (3) angeordnet sind, und der dritte Kanal einen dritten Verbindungskanal (331) und einen vierten Verbindungskanal (332) umfasst, die auf den beiden Seiten entlang der Längsrichtung des Modulquerträgers (3) angeordnet sind;
ein Ende des ersten Verbindungskanals (321) und ein Ende des zweiten Verbindungskanals (322) jeweils mit der ersten Öffnung (3121) in Verbindung stehen, ein Ende des dritten Verbindungskanals (331) und ein Ende des vierten Verbindungskanals (332) jeweils mit der zweiten Öffnung (3122) in Verbindung stehen; und die erste Verbindungsöffnung (323) und die zweite Verbindungsöffnung (333) jeweils am ersten Verbindungsabschnitt (32) und am zweiten Verbindungsabschnitt (33) vorgesehen sind, das andere Ende des ersten Verbindungskanals (321) und das andere Ende des zweiten Verbindungskanals (322) mit einem Ende der ersten Verbindungsöffnung (323) in Verbindung stehen, das andere Ende des dritten Verbindungskanals (331) und das andere Ende des vierten Verbindungskanals (332) mit einem Ende der zweiten Verbindungsöffnung (333) in Verbindung stehen und das andere Ende der ersten Verbindungsöffnung (323) und das andere Ende der zweiten Verbindungsöffnung (333) jeweils mit dem ersten Kanal (21) in Verbindung stehen.

5. Gehäuse für eine Batterie nach Anspruch 4, wobei der erste Verbindungskanal (321) mit dem dritten Verbindungskanal (331) in Verbindung steht, um einen integrierten Kanal zu bilden, und der zweite Verbindungskanal (322) mit dem vierten Verbindungskanal (332) in Verbindung steht, um einen integrierten Kanal zu bilden.

6. Gehäuse für eine Batterie nach einem der Ansprüche 1 bis 5, wobei eine Tiefe der Nut (312) 3 mm bis 5 mm beträgt, eine Differenz zwischen einer Länge einer Aufnahmebasis und einer Länge der Nut (312) 15 mm bis 35 mm beträgt und eine Differenz zwischen einer Breite der Aufnahmebasis und einer Breite der Nut (312) 15 mm bis 35 mm beträgt,
und/oder wobei der Boden des Modulquerträgers (3) mit der Flüssigkeitskühlplatte (4) unter Verwendung eines wärmeleitenden Strukturklebers (34) verbunden ist.

7. Gehäuse für eine Batterie nach einem der Ansprüche 1 bis 6, wobei der Modulquerträger (3) ein Metallbauteil ist,
insbesondere wobei der Modulquerträger (3) aus einer Aluminiumlegierung besteht.

8. Batteriepack, umfassend ein Batteriekernmodul (1) und das Gehäuse für eine Batterie nach einem der Ansprüche 1 bis 7, wobei das Batteriekernmodul (1) in einem Aufnahmeabschnitt (31) angeordnet ist.

9. Batteriepack nach Anspruch 8, wobei das Batteriekernmodul (1) eine Vielzahl von Batteriekernen (11), eine Vorpositionierungshalterung (12) und ein Gehäuse (13) umfasst; wobei am Boden des Gehäuses (13) eine Öffnung vorhanden ist und die Vorpositionierungshalterung (12) an der Öffnung am Boden des Gehäuses (13) anschlägt und diese blockiert, um einen Aufnahmeraum zur Aufnahme der Batteriekerne (11) zu bilden; und wobei an einer Seite der Vorpositionierungshalterung (12), die sich im Aufnahmeraum befindet, eine Vielzahl von Batteriekernpositionierungsabschnitten (121) angeordnet ist und die Vielzahl von Batteriekernen (11) jeweils in den Batteriekernpositionierungsabschnitten (121) angeordnet ist.

10. Batteriepack nach Anspruch 9, wobei das Batteriekernmodul (1) weiterhin eine positive Verbindungsscheibe (14) und eine negative Verbindungsscheibe (15) umfasst, die positive Verbindungsscheibe (14) und die negative Verbindungsscheibe (15) jeweils auf zwei Seiten der Vorpositionierungshalterung (12) angeordnet sind und die positive Verbindungsscheibe (14) und die negative Verbindungsscheibe (15) voneinander isoliert sind; und wobei an einer Bodenwand des Batteriekernpositionierungsabschnitts (121) eine Durchgangsnut (122) angeordnet ist und eine positive Elektrode oder eine negative Elektrode des Batteriekerns (11) über die Durchgangsnut (122) mit der positiven Verbindungsscheibe (14) oder der negativen Verbindungsscheibe (15) verbunden ist.

11. Batteriepack nach Anspruch 10, wobei ein vergossener Dichtstoff (16) zwischen dem Batteriekern (11), dem Gehäuse (13), der Vorpositionierungshalterung (12), der positiven Verbindungsscheibe und der negativen Verbindungsscheibe (15) angeordnet ist und der Batteriekern (11), das Gehäuse (13), die Vorpositionierungshalterung (12), die positive Verbindungsscheibe und die negative Verbindungsscheibe (15) hermetisch und fest durch den vergossenen Dichtstoff (16) verbunden sind.

12. Batteriepack nach Anspruch 11, wobei ein umrissener, rechteckiger dichtstoffbeständiger Schaumstoff (17) zwischen dem Batteriekernmodul (1) und einem Modulquerträger (3) angeordnet ist, ein Stufenabschnitt (311) um die Nut (312) im Aufnahmeabschnitt (31) herum angeordnet ist, eine Form des umrissenen, rechteckigen dichtstoffbeständigen Schaumstoffs (17) mit einer Form des Stufenabschnitts (311) übereinstimmt und der umrissene, rechteckige dichtstoffbeständige Schaumstoff (17) mit dem Stufenabschnitt (311) in Kontakt steht,
insbesondere wobei eine umrissene, rechteckige Öffnung des umrissenen, rechteckigen dichtstoffbeständigen Schaumstoffs (17) einer Öffnung der Nut (312) entspricht.

13. Batteriepack nach einem der Ansprüche 8 bis 12, wobei das Batteriekernmodul (1) mindestens eines von einem ternären Lithium-Batteriekernmodul und einem Polymer-Lithium-Batteriekernmodul ist,
und/oder wobei der Batteriekern (11) eine zylindrische Batterie oder eine Softpack-Batterie ist,
und/oder wobei ein Druckentlastungsventil am Batteriekernmodul (1) vorgesehen ist und das Druckentlastungsventil in Richtung der Nut (312) angeordnet ist.

14. Fahrzeug, umfassend den Batteriepack nach einem der Ansprüche 8 bis 13.

15. Fahrzeug nach Anspruch 14, wobei das Fahrzeug ein reines Elektrofahrzeug oder ein Hybridfahrzeug ist.

## Revendications

1. Un boîtier de batterie, comprenant:
un bac (2), un premier canal (21) étant formé dans le bac (2), une soupape anti-explosion (22) étant disposée sur le bac (2), et le premier canal (21) étant en communication avec la soupape anti-explosion (22);
au moins une poutre transversale de module (3), la poutre transversale de module (3) étant disposée dans le bac (2), la poutre transversale de module (3) comprenant une partie de logement (31), au moins une partie d'un fond de la partie de logement (31) étant enfoncée vers le bas pour former une rainure (312) pouvant contenir du gaz, et une ouverture étant disposée à au moins une extrémité de la rainure (312) qui est le long d'une direction de longueur de la poutre transversale de module (3); et
une plaque de refroidissement liquide (4), la plaque de refroidissement liquide (4) étant reliée de manière hermétique à un extérieur d'un fond de la poutre transversale de module (3), au moins un canal de connexion étant formé entre la plaque de refroidissement liquide (4) et la poutre transversale de module (3), et l'ouverture étant en communication avec le premier canal (21) par l'intermédiaire du canal de connexion.

2. Le boîtier de batterie selon la revendication 1, dans lequel la poutre transversale de module (3) comprend une première partie de connexion (32) et une deuxième partie de connexion (33), la première partie de connexion (32), la partie de logement (31) et la deuxième partie de connexion (33) étant fixées et connectées en séquence, et la première partie de connexion (32) et la deuxième partie de connexion (33) étant respectivement connectées au bac (2);
une première ouverture (3121) et une deuxième ouverture (3122) étant respectivement disposées aux deux extrémités de la rainure (312) qui sont le long de la direction de longueur de la poutre transversale de module (3);
un deuxième canal étant formé entre la première partie de connexion (32) et la plaque de refroidissement liquide (4) le long de la direction de longueur de la poutre transversale de module (3), et un troisième canal étant formé entre la deuxième partie de connexion (33) et la plaque de refroidissement liquide (4) le long de la direction de longueur de la poutre transversale de module (3); et
une extrémité du deuxième canal étant en communication avec la première ouverture (3121), et une extrémité du troisième canal étant en communication avec la deuxième ouverture (3122).

3. Le boîtier de batterie selon la revendication 2, dans lequel un premier orifice de communication (323) et un deuxième orifice de communication (333) sont respectivement prévus au niveau de la première partie de connexion (32) et de la deuxième partie de connexion (33), l'autre extrémité du deuxième canal étant en communication avec une extrémité du premier orifice de communication (323), l'autre extrémité du troisième canal étant en communication avec une extrémité du deuxième orifice de communication (333), et l'autre extrémité du premier orifice de communication (323) et l'autre extrémité du deuxième orifice de communication (333) étant respectivement en communication avec le premier canal (21).

4. Le boîtier de batterie selon l'une quelconque des revendications 1 à 3, dans lequel le deuxième canal comprend un premier canal de connexion (321) et un deuxième canal de connexion (322) disposés sur deux côtés le long de la direction de longueur de la poutre transversale de module (3), et le troisième canal comprend un troisième canal de connexion (331) et un quatrième canal de connexion (332) disposés sur les deux côtés le long de la direction de longueur de la poutre transversale de module (3);
une extrémité du premier canal de connexion (321) et une extrémité du deuxième canal de connexion (322) étant respectivement en communication avec la première ouverture (3121), une extrémité du troisième canal de connexion (331) et une extrémité du quatrième canal de connexion (332) étant respectivement en communication avec la deuxième ouverture (3122); et le premier orifice de communication (323) et le deuxième orifice de communication (333) étant respectivement prévus au niveau de la première partie de connexion (32) et de la deuxième partie de connexion (33), l'autre extrémité du premier canal de connexion (321) et l'autre extrémité du deuxième canal de connexion (322) étant en communication avec une extrémité du premier orifice de communication (323), l'autre extrémité du troisième canal de connexion (331) et l'autre extrémité du quatrième canal de connexion (332) étant en communication avec une extrémité du deuxième orifice de communication (333), et l'autre extrémité du premier orifice de communication (323) et l'autre extrémité du deuxième orifice de communication (333) étant respectivement en communication avec le premier canal (21).

5. Le boîtier de batterie selon la revendication 4, dans lequel le premier canal de connexion (321) est en communication avec le troisième canal de connexion (331) pour former un canal intégré, et le deuxième canal de connexion (322) est en communication avec le quatrième canal de connexion (332) pour former un canal intégré.

6. Le boîtier de batterie selon l'une quelconque des revendications 1 à 5, dans lequel une profondeur de la rainure (312) est de 3 mm à 5 mm, une différence entre une longueur d'une base de logement et une longueur de la rainure (312) est de 15 mm à 35 mm, et une différence entre une largeur de la base de logement et une largeur de la rainure (312) est de 15 mm à 35 mm,
et/ou dans lequel le fond de la poutre transversale de module (3) est connecté à la plaque de refroidissement liquide (4) à l'aide d'une colle structurelle thermoconductrice (34).

7. Le boîtier de batterie selon l'une quelconque des revendications 1 à 6, dans lequel la poutre transversale de module (3) est un composant métallique,
notamment dans lequel la poutre transversale de module (3) est en alliage d'aluminium.

8. Un pack de batteries, comprenant un module de cœur de batterie (1) et le boîtier de batterie selon l'une quelconque des revendications 1 à 7, le module de cœur de batterie (1) étant disposé dans une partie de logement (31).

9. Le pack de batteries selon la revendication 8, dans lequel le module de cœur de batterie (1) comprend une pluralité de cœurs de batterie (11), un support de pré-positionnement (12) et un boîtier (13) ; il y a une ouverture au fond du boîtier (13), et le support de pré-positionnement (12) s'arrête et bloque l'ouverture au fond du boîtier (13) pour former un espace de logement pour loger les cœurs de batterie (11) ; et une pluralité de parties de positionnement de cœur de batterie (121) sont disposées sur un côté du support de pré-positionnement (12) qui est situé dans l'espace de logement, et la pluralité de cœurs de batterie (11) sont respectivement disposés dans la pluralité de parties de positionnement de cœur de batterie (121).

10. Le pack de batteries selon la revendication 9, dans lequel le module de cœur de batterie (1) comprend en outre une feuille de connexion positive (14) et une feuille de connexion négative (15), la feuille de connexion positive (14) et la feuille de connexion négative (15) étant respectivement situées sur deux côtés du support de pré-positionnement (12), et la feuille de connexion positive (14) et la feuille de connexion négative (15) étant isolées l'une de l'autre; et une rainure traversante (122) est disposée sur une paroi de fond de la partie de positionnement de cœur de batterie (121), et une électrode positive ou une électrode négative du cœur de batterie (11) est connectée à la feuille de connexion positive (14) ou à la feuille de connexion négative (15) par l'intermédiaire de la rainure traversante (122).

11. Le pack de batteries selon la revendication 10, dans lequel un mastic de scellement coulé (16) est disposé entre le cœur de batterie (11), le boîtier (13), le support de pré-positionnement (12), la feuille de connexion positive et la feuille de connexion négative (15), et le cœur de batterie (11), le boîtier (13), le support de pré-positionnement (12), la feuille de connexion positive et la feuille de connexion négative (15) sont hermétiquement et solidement connectés à l'aide du mastic de scellement coulé (16).

12. Le pack de batteries selon la revendication 11, dans lequel une mousse résistante au mastic de scellement en forme de rectangle contourné (17) est disposée entre le module de cœur de batterie (1) et une poutre transversale de module (3), une partie en gradin (311) est disposée autour de la rainure (312) dans la partie de logement (31), une forme de la mousse résistante au mastic de scellement en forme de rectangle contourné (17) est cohérente avec une forme de la partie en gradin (311), et la mousse résistante au mastic de scellement en forme de rectangle contourné (17) est en contact avec la partie en gradin (311),
notamment dans lequel une ouverture en forme de rectangle contourné de la mousse résistante au mastic de scellement en forme de rectangle contourné (17) correspond à une ouverture de la rainure (312).

13. Le pack de batteries selon l'une quelconque des revendications 8 à 12, dans lequel le module de cœur de batterie (1) est au moins l'un parmi un module de cœur de batterie lithium ternaire et un module de cœur de batterie lithium polymère,
et/ou dans lequel le cœur de batterie (11) est une batterie cylindrique ou une batterie en emballage souple,
et/ou dans lequel une soupape de décharge de pression est prévue au niveau du module de cœur de batterie (1), et la soupape de décharge de pression est disposée en direction de la rainure (312).

14. Un véhicule, comprenant le pack de batteries selon l'une quelconque des revendications 8 à 13.

15. Le véhicule selon la revendication 14, dans lequel le véhicule est un véhicule électrique pur ou un véhicule hybride.
